Europäisches Patentamt

European Patent Office

Office européen des brevets

(19)

(11) Publication number : **0 312 458 B1**

(12) **EUROPEAN PATENT SPECIFICATION**

(45) Date of publication of patent specification :
**15.01.92 Bulletin 92/03**

(51) Int. Cl.$^5$ : **F17C 7/00**, G01N 25/14

(21) Application number : **88402594.1**

(22) Date of filing : **13.10.88**

(54) **Method for reducing pressure of highly compressed gases without generation of condensation droplets.**

(30) Priority : **13.10.87 US 107177**

(43) Date of publication of application :
**19.04.89 Bulletin 89/16**

(45) Publication of the grant of the patent :
**15.01.92 Bulletin 92/03**

(84) Designated Contracting States :
**AT BE CH DE ES FR GB IT LI NL SE**

(56) References cited :
**EP-A- 0 014 396**
**BE-A- 719 611**
**FR-E- 6 422**
**US-A- 4 057 964**
**PROCEEDINGS OF THE INSTITUTE OF EN-**
**VIRONMENTAL SCIENCES, 6 May 1987, pages**
**400-402**
**PATENT ABSTRACTS OF JAPAN, vol. 6, no.**
**252 (P-161)(1130) 10 December 1982**

(73) Proprietor : **L'AIR LIQUIDE, SOCIETE**
**ANONYME POUR L'ETUDE ET**
**L'EXPLOITATION DES PROCEDES GEORGES**
**CLAUDE**
**75, Quai d'Orsay**
**F-75321 Paris Cédex 07 (FR)**

(72) Inventor : **Kasper, Gerhard**
**5230 S. East Ave.**
**Countryside - IL 60525 (US)**
Inventor : **Wen, Horng Yuan**
**5230 S. East Ave.**
**Countryside - IL 60525 (US)**
Inventor : **Nishikawa, Yakinoba**
**5230 S. East Ave.**
**Countryside - IL 60525 (US)**

(74) Representative : **Vesin, Jacques et al**
**L'AIR LIQUIDE, SOCIETE ANONYME POUR**
**L'ETUDE ET L'EXPLOITATION DES**
**PROCEDES GEORGES CLAUDE 75, quai**
**d'Orsay**
**F-75321 Paris Cédex 07 (FR)**

## Description

### BACKGROUND OF THE INVENTION

The invention relates to a method of reducing the pressure of high pressure compressed gase without generation of droplets of condensible vapors. It also relates to a device to carry out said process.

Various impurities may be present in a compressed gas stored in a cylinder or the like, such as particles and/or vapors of condensible materials. See for example "Particle analysis in cylinder gas" — H.Y. Wen and G. Kasper — Proceedings — Institute of Environmental Sciences — May 6, 1987.

It is known from the article entitled " A gas filtration system for concentrations of $10^{-5}$ particles/cm$^3$ " from G. KASPER and H.Y. WEN, published in Aerosol Science and Technology 5 : 167-185 (1986), how to achieve "totally" particle-free process gases.

Particle analysis is to day commonly carried out for a plurality of purposes, usually in conjunction with contamination studies. Since most analyzers operate at ambient pressure, while gases, e.g. from cylinders, can be highly compressed (up to about 172.4 bar (2500 psi) or more), it is necessary to expand said gases to a low pressure, generally atmospheric pressure, before said particle analysis.

Up to now, the measurement of said particles concentration in the gas at low pressure, e.g. atmospheric pressure, has been made by expanding said compressed gas directly from the high pressure of the cylinder to atmospheric pressure (see the first article cited above).

However, as disclosed in the copending application, incorporated herein as a reference, entitled "Method of detecting trace amounts of condensible vapors from compressed gas", EP-A-0312457, — Kasper et al. —, it has been discovered that under certain circumstances, condensible vapors, even present as trace amounts, may generate droplets of condensed vapors during the expansion of the compressed gas through a critical orifice.

If a pressure regulator which generally comprises at least one critical orifice is used for the expansion of sais compressed gas, it may thus lead to the formation of droplets which will be thereafter detected as particles by the analyzer.

The invention aims primarily at reducing the pressure of highly compressed gases without the introduction of condensation droplets in the expanded gas.

The invention further aims at reducing the pressure of highly compressed gas in order to analyze the particles present in said gas, without introducing additionnal particles.

### SUMMARY OF THE INVENTION

According to the invention, the pressure drop between the high pressure at which the compressed gas is stored in a cylinder and the low pressure, e.g. atmospheric pressure, to which it is expanded, is distributed over a sufficient number of stages, each comprising a critical orifice, so as to limit the momentary temperature drop of the gas in each stage to a value which is insufficient to initiate droplet formation.

The spacing between two successive stages is preferably sufficient to allow the gas temperature after expansion through an orifice to return to approximately its original value before said expansion through said orifice.

One application of this method is present reduction of cylinder gases where recent experiments have shown that sub-ppb levels of hydrocarbon contamination cause droplet formation at pressure drops above about 20 :1. Of course, such pressure drop may vary for different vapor impurities and/or carrier gases and have to be determined for each of them.

One further application of this "droplet free" pressure reduction method is the analysis of particles present in the gas before pressure reduction where the formation of droplets is a disturbing artefact. Such particle analysis is today commonly carried out for a multitude of purposes usually in conjunction with contamination studies. Since most analyzers operate at ambient pressure, while gases, e.g. from cylinders, can be highly compressed, the pressure drops may be significant.

As part of this application, a device is described for reducing gases from 200 bar to 1 bar in 2 stages for the purpose of particle sampling, such device having applications, among others, in pressure regulators.

### DETAILED DESCRIPTION OF THE INVENTION

These and further objects will be more clearly understood by reference to the following description of various embodiments of the invention, chosen for purpose of illustration only, along with the claims and the accompanying drawings wherein :

Fig. 1, represents the temperature profile of an expanding supersonic jet of gas.

Fig. 2, shows various curves of droplets concentration versus pressure drop of gas.

Fig. 3, shows a two-stage device used to reduce the pressure of gas from 200 bar to 1 bar without droplets formation.

The invention aims to avoid the formation of condensate droplets by distributing the entire pressure drop over a sufficient number of steps so as to limit each individual pressure drop to a value where the local cooling in the jet is insufficient to cause droplets formation.

To avoid droplet formation, it is necessary to provide for sufficient space between consecutive orifices, so as to allow the gas temperature to return to its original level before expansion.

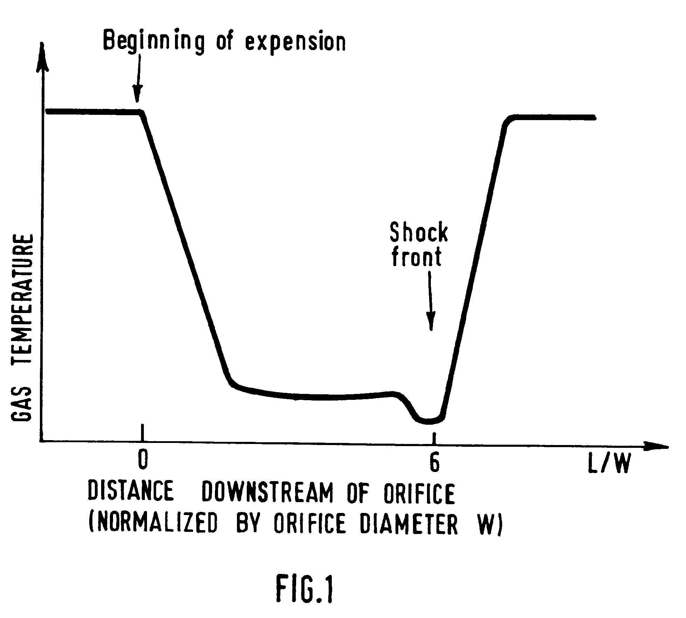

The temperature profile of an expanding supersonic jet is shown in figure 1 gas temperature versus distance L downstream of orifice, normalised by orifice diameter W. Initially there is a very rapid temperature drop associated with an almost adiabatic expansion. If the expansion were perfectly adiabatic, then the low temperature $T_2$ would be

$$T_2 = T_1 \; (P_2/P_1)^{\frac{x-1}{x}}$$

where

$T_2$ = temperature of gas after expansion
$T_1$ = temperature of gas before expansion
P2 = pressure of gas after expansion
P1 = pressure of gas before expansion
$x$ = $\dfrac{Cp}{Cv}$
Cp = specific heat capacity of the gas at constant pressure
Cv = specific heat capacity of the gas at constant volume.

$x$ is a well known quantity for gases ($N_2$ : 1.33). However, the cool jet extracts some heat from the orifice, which prevents the temperature from falling all the way. This fact is actually exploited in the present invention because otherwise it would be impossible to prevent condensation even for very slight presure drops.

About 5 to 10 orifice diameters downstream, (figure 1) the gas goes through a shock wave and then rapidly returns to roughly its original temperature as it looses its kinetic energy. (The Joule Thompson effect and heat extracted from the orifice are ignored, here).

According to a prefered embodiment of the invention, the method may comprise a step of applying heat to the orifice, so as to avoid cooling of the orifice and its surroundings over long periods of operation.

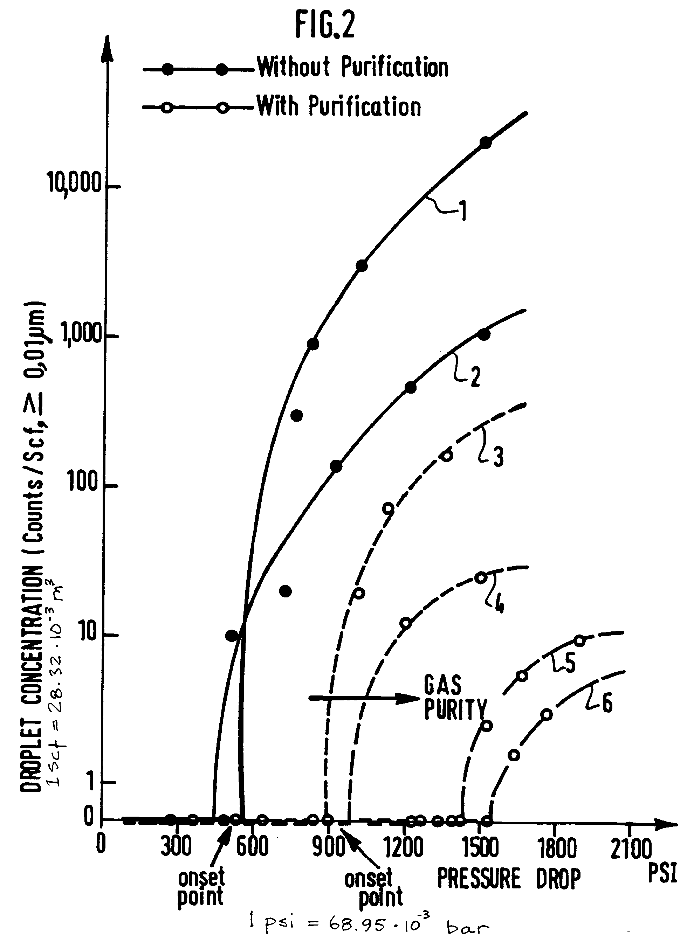

Fig. 2 shows various curves of droplet concentration (counts of droplets having a diameter greater than or equal to 0.01 um) versus pressure drop. These curves were obtained in a way disclosed in the copending application referred to above and incorporated in the present application.

Curves 1 and 2 represent the droplet concentration versus pressure drop for two different cylinders of nitrogen having a pressure of about 172.4 bar (2500 psi) at the beginning. The gas is filtered to eliminate particles, then expanded through a critical orifice and the droplets counted by a condensation nuclei counter. The onset points are respectively about 31.0 and 37.9 bar (450 and 550 psi). Up to this pressure drop through the critical orifice, no particle is counted. Within a variation of about 3.46 bar (50 psi) of the pressure drop, about 10 droplets were counted, to reach 100 to 1 000 droplets 3.45 bar (50 psi) higher. The onset point indicates a very important variation of the slope of the curve and thus a precise frontier.

Curves 3 and 4 represent the same as curves 1 and 2, but with the use of purifying means such as those made of molecular sieve surrounded by dry ice or an other refrigerating agent. This purifying means creates a condensation of some vapors present in the gas which has thus a lower content of condensible vapors.

Onset points are respectively for about 61.4 and 68.2 bar (890 and 990 psi) of pressure drop, the droplet concentration being lower than that of curves 1,2.

Curves 5, 6 have been drawn with gases highly purified through more efficient purifying means than those used to draw curves 3,4. The onset points are thus higher (about 99.3 and 107.6 bar (1440 and 1560 psi) of pressure drop) and the droplet concentration still lower.

These various curves illustrate the phenomena on which the invention is based : as soon as the pressure drop of a gas across a critical orifical is sufficient, droplets of condensed vapors appear in the jet and may thus create a pertubation when the aim is to reduce the pressure of said gas without the formation of particles. This pressure drop depends, among others, on the initial concentration of condensible vapors in said gas.

The method of the invention aims at expanding said gas through a critical orifice to a pressure drop lower than the onset pressure drop for concentration of that gas and repeating said expansions until the aimed low pressure, i.e. generally atmospheric pressure, is reached.

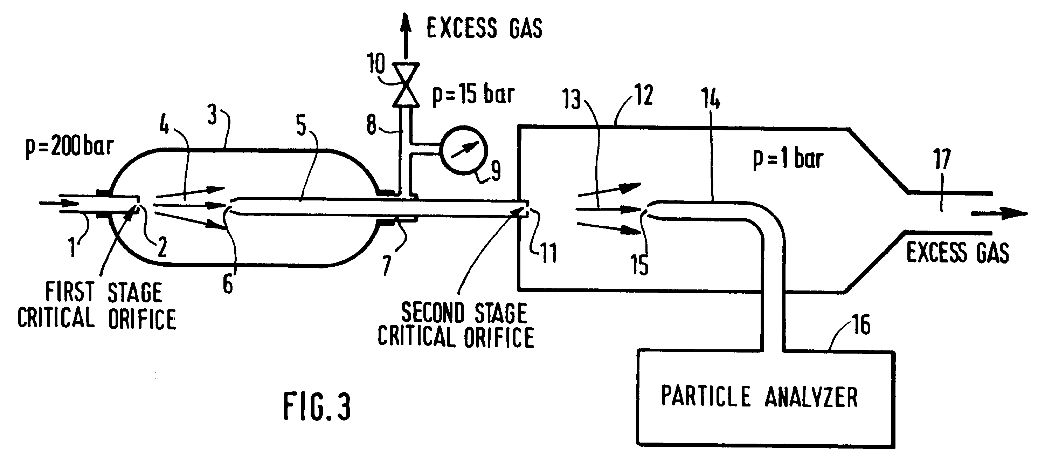

Figure 3 shows one embodiment of the invention which can be used to reduce pressure from levels of 200 bar to 1 bar for purposes of particle sampling.

"Particle sampling" is a commonly known procedure to obtain representative samples of particulate contamination from a gas by guiding a portion of said gas into an appropriate analytical device without incurring losses of particles or generating particles on the way.

The gas from the container, such as a cylinder (not represented) having a pressure of about 200 bar flows through the conduit 1 and the critical orifice 2, which may be surrounded by heating means, not represented on the figure, for the purpose of maintaining the temperature of said orifice 2 at an about constant temperature, if necessary.

The expanded jet 4 flows in the first expansion chamber 3 having an output 7 connected to a conduit 8 and a pressure regulation valve 10, to maintain the pressure in said expansion chamber 3 above a predetermined value, e.g. 15 bar in this example (nitrogen from a cylinder has been chosen for purpose of illustration of the present invention). The pressure in the conduit 8 is measured by the pressure gauge 9. The vent valve 10 can also be a critical orifice. The jet 4 of gas then partially enters through the input 6 and flows through the duct 5 whose output is a second critical orifice 11 through which the gas is expanded, from an intermediate pressure (e.g. 15 bar) (between the high pressure, e.g. 200 bar and the low pressure — atmospheric pressure — 1 bar), to the low atmospheric pressure, in the second expansion chamber 12. The vent valve 10 (or critical orifice) allows a reduction of the volumetric gas flow rate and consequently, the gas velocity in the duct 5 approaching the next critical orifice 11. This is generally essential in this particular application of the invention to analyze particles, in order to avoid particles losses by inertial in pact as is known to be the case from the article of H.Y. Wen and G. Kasper entitled "Particle analysis in cylinder gases" published in Proceedings — Institute of Environmental Sciences (see figure 2 of this article).

Venting gas in between stages is important because the expanding gas increased its volume flow rate and this its velocity with each expansion stage.The jet 13 of gas is sampled by the sensor means 14, 15 and analyzed by the particle analyzer 16. The excess of gas is vented through the output 17 of the expansion chamber 12.

The principles set forth above are also applicable to pressure regulating devices commonly used in the gas industry. These devices function on the basis of one or two stage variable critical orifices and suffer from essentially the same problem as simple critical orifices discussed so far. Figure 1 of the article "Particle analysis in cylinder gases" shows the significant generation of ultrafine particles (< 0.1 μm) and the abrupt end of this below a critical pressure drop.

At the time this article has been published, May 6, 1987 no explanation has been given to this phenoma : the inventors had not yet proved that there is an onset pressure drop point across a critical orifice, above which condensible vapors are condensed if supersaturation may thus be created, and that the particles so detected (on figure 1 of said article) were both particles and condensed droplets.

The invention thus allows, among others, to built multistage pressure regulators having a plurality of critical orifices and disposed so as to avoid sub-p.p.b. or sub-p.p.t. levels of condensible vapors to be condensed.

## Claims

1. A method for reducing pressure of a compressed gas, comprising a carrier gas and condensible vapors, from a high pressure to a low pressure without generation of condensation droplets, comprising the steps of providing a compressed gas at a high pressure, expanding through a first critical orifice said compressed gas from said high pressure to a first intermediate pressure between said high and said low pressure to provide an expanded compressed gas at said first intermediate pressure, expanding through a second critical orifice said expanded compressed gas from said first intermediate pressure to said low pressure, pressure drops between said high and first intermediate pressure and between said first intermediate pressure and said low pressure being lower than the pressure drops necessary to cause droplets formation of condensible vapors.

2. A method for reducing pressure of a compressed gas according to claim 1, wherein said pressure drop is less than about 20 : 1.

3. A method for reducing pressure of a compressed gas comprising a carrier gas and condensible vapors from a high pressure to a low pressure without generation of condensation droplets, comprising the steps of providing a compressed gas at a high pressure, expanding successively said compressed gas through a plurality of critical orifices from said high pressure to said low pressure, the pressure drop across each critical orifice being lower than the pressure drop necessary to cause droplets formation of said condensible vapors.

4. A method according to claim 3 further comprising a step of reducing the volumetric gas flow rate between two successive critical orifices.

5. A method according to claim 3 further comprising the step of reducing the velocity of the gas approaching a critical orifice.

6. A method according to claim 3, further comprising a step of applying heat to at least one of the critical orifices so as to avoid cooling of said orifices.

7. A method according to claim 3, further comprising a step of providing a sufficient distance between two consecutive orifices so as to allow the gas temperature to return about to its original temperature before expansion through the first of said two consecutive orifices.

8. A method according to claim 7, wherein said sufficient distance is about between 5 to 10 times the diameter of the critical orifice.

## Patentansprüche

1. Verfahren zur Druckreduzierung eines komprimierten Gases, das ein Trägergas und kondensierbare Dämpfe umfasst, von einem hohen Druck zu einem niederen Druck ohne Erzeugung von Kondensationströpfchen, das die Schritte umfasst : Bereitstellen eines komprimierten Gases bei einem hohen Druck ; Expandieren des komprimierten Gases durch eine erste kritische Öffnung von dem hohen Druck auf einen ersten Zwischendruck zwischen dem hohen und dem niederen Druck, um ein expandiertes, komprimiertes Gas bei dem ersten Zwischendruck zu erzeugen ; Expandieren des expandierten, komprimierten Gases durch eine zweite kritische Öffnung von dem ersten Zwischendruck zu dem niederen Druck ; wobei die Druckabfälle zwischen dem hohen und dem ersten Zwischendruck und dem ersten Zwischendruck und dem niederen Druck geringer sind als die Druckabfälle, die notwendig sind, um die Tröpfchenbildung von kondensierbaren Dämpfen zu bewirken.

2. Verfahren zur Druckreduzierung eines komprimierten Gases nach Anspruch 1, wobei der Druckabfall weniger als etwa 20 : 1 ist.

3. Verfahren zur Druckreduzierung eines komprimierten Gases, das ein Trägergas und kondensierbare Dämpfe umfasst, von einem hohen Druck zu einem niederen Druck ohne Erzeugung von Kondensationströpfchen, das die Schritte umfasst : Bereitstellen eines komprimierten Gases bei einem hohen Druck ; sukzessives Expandieren des komprimierten Gases durch eine Vielzahl von kritischen Öffnungen von dem hohen Druck zu dem niederen Druck, wobei der Druckabfall über jeder kritischen Öffnung geringer ist als der Druckabfall, der notwendig ist, um die Tröpfchenbildung der kondensierbaren Dämpfe zu bewirken.

4. Verfahren nach Anspruch 3, das weiterhin den Schritt der Reduzierung der volumetrischen Gasfliessgeschwindigkeit zwischen zwei aufeinanderfolgenden kritischen Öffnungen umfasst.

5. Verfahren nach Anspruch 3, das weiterhin den Schritt der Reduzierung der Geschwindigkeit des Gases, das sich einer kritischen Öffnung nähert, einschliesst.

6. Verfahren nach Anspruch 3, das weiterhin den Schritt der Anwendung von Wärme gegenüber mindestens einer der kritischen Öffnungen umfasst, um das Abkühlen dieser Öffnungen zu verhindern.

7. Verfahren nach Anspruch 3, das weiterhin den Schritt einschliesst, einen genügenden Abstand zwischen zwei aufeinanderfolgenden Öffnungen zu schaffen, um zu ermöglichen, dass die Gastemperatur auf ihre ursprüngliche Temperatur vor der Expansion durch die erste der zwei aufeinanderfolgenden Öffnungen zurückkehrt.

8. Verfahren nach Anspruch 7, wobei der genügende Abstand etwa 5 bis 10 mal so gross wie der Durchmesser der kritischen Öffnung ist.

**Revendications**

1. Une méthode de réduction de la pression d'un gaz comprimé, comprenant un gaz vecteur et des vapeurs condensables depuis une pression haute jusqu'à une pression basse sans production de gouttelettes de condensation, comprenant les étapes de se munir d'un gaz comprimé à pression haute, faire détendre ledit gaz comprimé à travers un premier orifice critique depuis ladite pression haute jusqu'à une première pression intermédiaire entre ladite pression haute et ladite pression basse de façon à obtenir un gaz comprimé détendu à ladite première pression intermédiaire, faire détendre ledit gaz comprimé détendu à travers un second orifice critique depuis la première pression intermédiaire jusqu'à ladite pression basse, les baisses de pression entre ladite pression haute et ladite pression intermédiaire et entre ladite première pression intermédiaire et ladite pression basse étant inférieures aux chutes de pression requises pour provoquer la formation de gouttelettes de vapeurs condensables.

2. Une méthode de réduction de la pression d'un gaz comprimé selon la revendication 1, où la baisse de pression est inférieure à environ 20 : 1.

3. Une méthode de réduction de la pression d'un gaz comprimé comprenant un gaz vecteur et des vapeurs condensables, depuis une pression haute jusqu'à une pression basse sans production de gouttelettes de condensation comprenant les étapes de se munir d'un gaz comprimé à pression haute, faire détendre tour à tour ledit gaz comprimé à travers plusieurs orifices critiques depuis ladite pression haute jusqu'à ladite pression basse, la chute de pression au niveau de chaque orifice étant inférieur à la chute de pression requise pour provoquer la formation de gouttelettes desdites vapeurs condensables.

4. Une méthode selon la revendication 3, comprenant en plus l'étape de réduire le taux volumétrique d'écoulement de gaz entre deux orifices critiques consécutifs.

5. Une méthode selon la revendication 3, comprenant en plus l'étape de réduire la vitesse du gaz s'approchant d'un orifice critique.

6. Une méthode selon la revendication 3, comprenant en plus une étape d'appliquer de la chaleur sur au moins un des orifices critiques de façon à empêcher leur refroidissement.

7. Une méthode selon la revendication 3, comprenant en plus l'étape d'assurer une distance suffisante entre deux orifices consécutifs de façon à permettre à la température du gaz de retourner à son niveau original pendant la détente au niveau du premier des deux dits orifices consécutifs.

8. Une méthode selon la revendication 7, ou ladite distance suffisante est environ entre 5 et 10 fois le diamètre de l'orifice critique.

FIG.1

# FIG.2

Without Purification

With Purification

FIG.3

EXCESS GAS

p = 200 bar

p = 15 bar

p = 1 bar

EXCESS GAS

FIRST STAGE
CRITICAL ORIFICE

SECOND STAGE
CRITICAL ORIFICE

PARTICLE ANALYZER

EP 0 312 458 B1